Europäisches Patentamt

European Patent Office

Office européen des brevets

(19)

(11) Veröffentlichungsnummer : **0 204 110**
**B1**

# (12) EUROPÄISCHE PATENTSCHRIFT

(45) Veröffentlichungstag der Patentschrift :
27.07.88

(21) Anmeldenummer : 86105063.1

(22) Anmeldetag : 12.04.86

(51) Int. Cl.⁴ : **F 16 J 15/32, F 15 B 1/053**

(54) Dichtungsanordnung für Kolbenspeicher.

(30) Priorität : 04.05.85 DE 3516075

(43) Veröffentlichungstag der Anmeldung :
10.12.86 Patentblatt 86/50

(45) Bekanntmachung des Hinweises auf die Patenterteilung : 27.07.88 Patentblatt 88/30

(84) Benannte Vertragsstaaten :
DE FR GB IT

(56) Entgegenhaltungen :
DE-A- 2 550 363
DE-B- 1 303 342
FR-A- 2 229 900
PATENTS ABSTRACTS OF JAPAN, Band 8, Nr. 120
(M-300)[1557], 6. Juni 1984; & JP - A - 59 26 669
(SAKAGAMI SEISAKUSHO K.K.) 10-02-1984
Dr. Ing. EDGAR SCHMID: "Handbuch der Dichtungstechnik" 1981, Seiten 146-153, Expert Verlag 7031
Grafenau 1/Württ., DE

(73) Patentinhaber : Parker-Prädifa GmbH
Arnold-Jäger-Strasse 1
D-7120 Bietigheim-Bissingen (DE)

(72) Erfinder : Lehmann, Werner
Baiselberg 1
D-7123 Sachsenheim-Ochsenbach (DE)

(74) Vertreter : Wolff, Michael, Dipl.-Phys.
Kirchheimer Strasse 69
D-7000 Stuttgart 75 (DE)

## Beschreibung

Die Erfindung betrifft eine Dichtungsanordnung für hydropneumatische Druckspeicher mit einem in einem zylindrischen Hohlraum axial verschiebbaren Kolben zur Trennung eines Gasraumes und eines Flüssigkeitsraumes voneinander, wobei der Kolben in axialem Abstand voneinander zwei ringförmige Dichtungskörper, gegebenenfalls unterschiedlicher Härte, mit ungefähr U-förmigem Profil trägt, welche je, an ein ungefähr rechteckig profilierten Aufspannteil je einstückig angeformt, eine kolbenseitige Haftlippe und eine, durch eine Ringnut von dieser getrennte, Dichtlippe mit einer stumpfwinkligen Dichtkante aufweisen, deren fluidseitige Flanke bezüglich der Kolbenachse steil und deren kolbenmittenseitige Flanke diesbezüglich flacher ist ; und wobei sich die zwei Ringnuten der beiden Dichtungskörper in einander entgegengesetzte axiale Richtungen öffnen.

Bei einer aus der DE-B-1 303 342 bekannten Dichtungsanordnung dieser Art ist der Aufspannteil beider Dichtungskörper an seinem kolbenmittenseitigen Ende radial außen zylindrisch gestaltet, sodaß die Flüssigkeits-Schleppströmung in dem bei einem Druckgefälle vom Gas- zum Flüssigkeitsraum zum Gleitspalt werdenden Dichtspalt zwischen dem den Gas- und Flüssigkeitsraum vergrößernden bzw. verkleinernden Kolben einerseits und der Innenwandung des Druckspeichers andererseits zu einer die entgegengerichtete, vernachlässigbar kleine Gasdruckströmung bei weitem überwiegenden Flüssigkeitsleckströmung führt, welche die Gasdichtlippe passiert. Infolgedessen sammelt sich im Gasraum allmählich Flüssigkeit an, die sein Volumen verkleinert und dadurch die Speicherwirkung verschlechtert. Falls dies vermieden werden soll, muß der Druckspeicher zur Entfernung der in den Gasraum eingedrungenen Flüssigkeit vorzeitig de- und remontiert werden. Daran ändert auch der in der Mitte zwischen den beiden Dichtungskörpern angeordnete O-Ring nichts, der nachteiligerweise die Kolbenreibung erhöht.

Der Erfindung liegt daher die Aufgabe zugrunde, eine Dichtungsanordnung für hydropneumatische Druckspeicher mit einem die Fluide trennenden Kolben zu schaffen, welche die Flüssigkeitsleckage infolge Schleppströmung durch eine verbesserte Dichtwirkung wesentlich vermindert, ohne dabei die Haft- und Gleitreibung zwischen dem Kolben und der ihn führenden Innenwandung des Druckspeichers zu erhöhen.

Diese Optimierungsaufgabe ist bei einer Dichtungsanordnung der eingangs genannten Art erfindungsgemäß dadurch gelöst, daß der den axial zwischen den beiden Dichtlippen gelegenen Gleitspalt gegen den Gasraum abdichtende Dichtungskörper am radial äußeren Umfang seines Aufspannteiles mit einer einstückig angeformten, mit dem anderen Dichtungskörper zusammenwirkenden stumpfwinkligen Sekundärdichtkante versehen ist, deren diesem anderen Dichtungskörper zugewandte Flanke steil und deren dichtlippenseitige Flanke flacher ist. Durch diese Sekundärdichtkante, welche die häufig verwendete, aber praktisch wirkungslose Abdichtung des Gleitspaltes in der Kolbenmitte ersetzt, wird vorteilhafterweise erreicht, daß die durch die Schleppströmung in den Dichtspalt eingedrungene Flüssigkeit zwar bis zu dessen Ende, an dem sich die Sekundärdichtkante befindet, gelangt und dadurch für eine gute reibungsmindernde Schmierung sorgt, jedoch nicht darüberhinaus, also nicht unter der Gasdichtlippe hindurch in den Gasraum. Die außergewöhnliche Flüssigkeitsdichtheit der erfindungsgemäßen Dichtungsanordnung beruht auf der Flüssigkeitsdruckdifferenz zwischen Flüssigkeitsraum und Dichtspalt, wo der Druck wesentlich niedriger ist, sodaß die Viskosität der Flüssigkeit im Gleitspalt herabgesetzt ist und die Sekundärdichtkante nur den normalen Schmierfilm passieren läßt. Dies gilt für alle Kolbengeschwindigkeiten und Temperaturen. Die Wirksamkeit und Lebensdauer der Sekundärdichtkante wird von Druckpulsationen und Schaltschlägen im Flüssigkeitsraum nicht beeinträchtigt, während die primäre Flüssigkeitsdichtlippe davon betroffen ist. Sollte der Flüssigkeitsraum druckarm oder -los sein, sorgt dennoch der den Gasraum abdichtende Dichtungskörper mittels seiner Sekundärdichtkante und des Gasdruckes für eine statische Flüssigkeitsdichtheit, die nicht mit Hilfe von überdimensionierten Dichtlippen und überhöhter Vorspannung derselben erreicht wurde, worunter die Leichtgängigkeit des Kolbens gelitten hätte. Im übrigen ist an der erfindungsgemäßen Dichtungsanordnung auch eine durch die Sekundärdichtkante verbesserte statische und dynamische Gasdichtheit festzustellen, deren Bedeutung allerdings hinter der, insbesondere dynamischen, Flüssigkeitsdichtheit zurücksteht.

Bevorzugt ist die Sekundärdichtkante der erfindungsgemäßen Dichtungsanordnung am kolbenmittenseitigen Ende des den Gasraum abdichtenden Dichtungskörpers angeordnet, wobei die steile Flanke der Sekundärdichtkante radial innen an der kolbenmittenseitigen Stirnfläche dieses Dichtungskörpers endet. Dadurch wird die Gasdichtlippe des einen Lippenring darstellenden Dichtungskörpers beim Gasraum in ihrer Funktion am wenigsten von der Sekundärdichtkante beeinflußt, auf die der vom Aufspannteil dieses Dichtungskörpers übertragene Gasdruck unvermindert einwirkt.

Bei bevorzugten Ausführungsformen der erfindungsgemäßen Dichtungsanordnung ist der den axial zwischen den beiden Dichtlippen gelegenen Gleitspalt gegen den Flüssigkeitsraum abdichtende Dichtungskörper am radial äußeren Umfang seines Aufspannteiles mit einer flachen Rampe zur Leckflüssigkeitsrückführung versehen, welche diesen Dichtungskörper in axialer Richtung zur Kolbenmitte radial verjüngt. Der zwischen dieser Rampe und der Innenwandung des Druckspeichers vorhandene Keilspalt sorgt für eine beträchtliche Rückförderung von in den Dichtspalt eingedrungener Leckflüssigkeit aus diesem Gleitspalt in den Flüssigkeitsraum zurück, wenn der Kolben einen Rückhub ausführt, bei dem er den Gas- und Flüssigkeitsraum verkleinert bzw. vergrößert. Infolgedessen sind die üblicherweise in den Kolben eingebauten Rückschlagventile entbehrlich, die bisher an den Dichtspalt angeschlossen waren, um den Schleppflüssigkeitsdruck abzubauen.

Bevorzugt ist die Rampe am kolbenmittenseitigen Ende des den Flüssigkeitsraum abdichtenden Dichtungskörpers angeordnet, wobei die Rampe radial innen an der kolbenmittenseitigen Stirnfläche dieses Dichtungskörpers endet. Außer dem Vorteil der besonderen Wirksamkeit dieser Rampenanordnung ergibt sich bei deren Kombination mit der entsprechenden Anordnung der Sekundärdichtkante der herstellungstechnische Vorteil, daß beide Dichtungskörper zunächst in gleicher Gestalt mittels desselben Werkzeuges erzeugt werden können und danach von einem der zwei Dichtungskörper nur noch die Sekundärdichtkante entfernt und darüberhinaus die Rampe erzeugt werden muß, was in einem Arbeitsgang möglich ist.

Durch einen jedem Dichtungskörper zugeordneten Backring, der, gegebenenfalls in einer radial äußeren Eckaussparung des Aufspannteiles des Dichtungskörpers, an dessen kolbenmittenseitigem Ende angeordnet ist, läßt sich die erfindungsgemäße Dichtungsanordnung an die verschiedensten Betriebsbedingungen zweckmäßig anpassen.

Die der Erfindung zugrundeliegende Aufgabe ist bei einer Dichtungsanordnung der eingangs genannten Art wahlweise dadurch gelöst, daß der den axial zwischen den beiden Dichtlippen gelegenen Gleitspalt gegen den Gasraum abdichtende Dichtungskörper am kolbenmittenseitigen Ende seines Aufspannteiles mit einem, gegebenenfalls in einer radial äußeren Eckaussparung dieses Aufspannteiles angeordneten, Backring versehen ist, der eine mit dem anderen Dichtungskörper zusammenwirkende stumpfwinklige Sekundärdichtkante aufweist, deren diesem anderen Dichtungskörper zugewandte Flanke steil und deren dichtlippenseitige Flanke flacher ist. Dadurch ergeben sich bei prinzipiell gleicher Wirkung dieser analogen Lösungsmittel dieselben obengenannten Vorteile.

Hier kann zur Schaffung eines Leckflüssigkeitsrückfördervermögens der den axial zwischen den beiden Dichtlippen gelegenen Gleitspalt gegen den Flüssigkeitsraum abdichtende Dichtungskörper am kolbenmittenseitigen Ende seines Aufspannteiles mit einem, gegebenenfalls in einer radial äußeren Eckaussparung dieses Aufspannteiles angeordneten, Backring versehen sein, der eine flache Rampe zur Leckflüssigkeitsrückförderung aufweist, welche den Backring in axialer Richtung zur Kolbenmitte radial verjüngt.

Offenbar ist es möglich, die Sekundärdichtkante und die Rampe zu verdoppeln, wobei dann eine Sekundärdichtkante und eine Rampe je einem Backring angehören, während die andere Sekundärdichtkante bzw. Rampe am Aufspannteil des Dichtungskörpers ausgebildet ist.

Es ist auch möglich, nur eine einzige Sekundärdichtkante und zwei Rampen oder eine einzige Rampe und zwei Sekundärdichtkanten vorzusehen, wobei von den zwei Rampen bzw. Sekundärdichtkanten eine am Aufspannteil des Dichtungskörpers und eine an dessen Backring ausgebildet ist.

Im allgemeinen wird der die Flüssigkeitsdichtlippe aufweisende Dichtungskörper eine Härte zeigen, die zwischen der einheitlichen Härte der verwendeten Backringe und der Härte des die Gasdichtlippe aufweisenden Dichtungskörpers liegt, und zwar mehr bei letzterer.

Im folgenden ist die Erfindung anhand mehrerer durch die Zeichnung beispielhaft dargestellter Ausführungsformen der erfindungsgemäßen Dichtungsanordnung im einzelnen erläutert. Es zeigt :

Fig. 1 einen halben Axialschnitt durch den Kolben eines im übrigen nicht dargestellten hydropneumatischen Druckspeichers mit einer ersten Ausführungsform ;

Fig. 2 die andere Hälfte des Axialschnittes mit einer zweiten Ausführungsform ;

Fig. 3 eine vergrößerte Darstellung der zur Deckung gebrachten Profile der beiden unbelasteten Dichtungskörper der ersten Ausführungsform ;

Fig. 4 die vergrößerten Profile der zwei unbelasteten Dichtungskörper der ersten Ausführungsform ;

Fig. 5 die vergrößerten Profile der zwei mit je einem Backring versehenen unbelasteten Dichtungskörper der zweiten Ausführungsform und

Fig 6 bis 9 entsprechende Darstellungen weiterer Ausführungsformen.

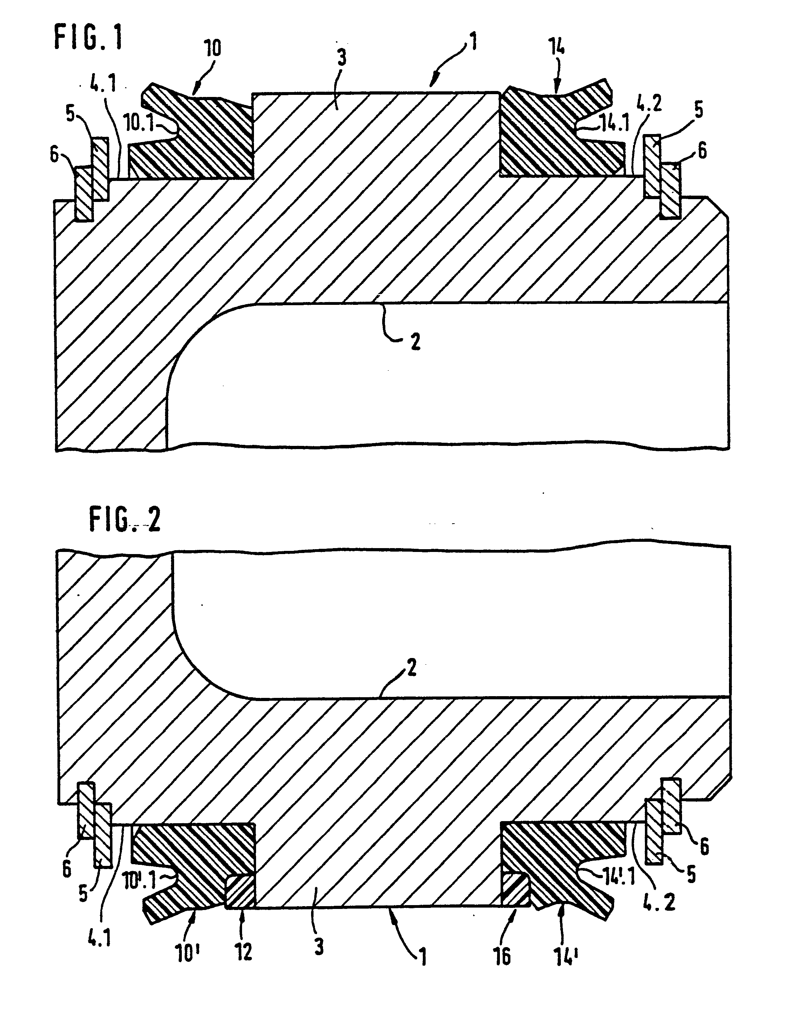

Der in einem kreiszylindrischen Hohlraum des Druckspeichers verschiebbare, rotationssymmetrische Speicherkolben 1 weist eine gegen den in Fig. 1 rechts zu denkenden Gasraum des Druckspeichers offene zentrale Sackbohrung 2 auf, die den eigentlichen Gasraum vergrößert und ein minimales Gasvolumen bei Anschlag des Kolbens am Zylinderkopf gewährleistet. Der Kolben 1 weist eine durch einen im Profil rechteckigen Außenbund 3 axial unterbrochene, zylindrische Umfangsfläche 4 auf, deren dem in Fig. 1 links zu denkenden Flüssigkeitsraum benachbarter Abschnitt 4.1 einen kreisringförmigen, profilierten Dichtungskörper 10 bzw. einen solchen Körper 10' und zusätzlich einen Backring 12 trägt und deren dem Gasraum benachbarter Abschnitt 4.2 ebenfalls einen kreiszylindrischen, aber anders profilierten Dichtungskörper 14 bzw. einen solchen Körper 14' und einen zusätzlichen Backring 16 trägt, bei dem es sich um den Backring 12 handeln kann, der nur gewendet zu werden braucht.

Die auf die Umfangsfläche 4 gespannten Dichtungskörper und gegebenenfalls die Backringe liegen an dem Außenbund 3 an, dem auf beiden axialen Seiten je ein Dichtungskörper-Stützring 5 am Kolben 1 gegenübersteht, wobei der Stützring durch einen Seeger-Ring 6 am Kolben gesichert ist.

Die Relativanordnung der beiden Dichtungskörper 10 und 14 bzw. 10' und 14' ist so getroffen, daß die Nuten 10.1 und 14.1 bzw. 10'.1 und 14'.1 dieser Lippenringe sich in einander entgegengesetzten axialen Richtungen öffnen, die vom Außenbund 3 zum Flüssigkeits- bzw. Gasraum weisen.

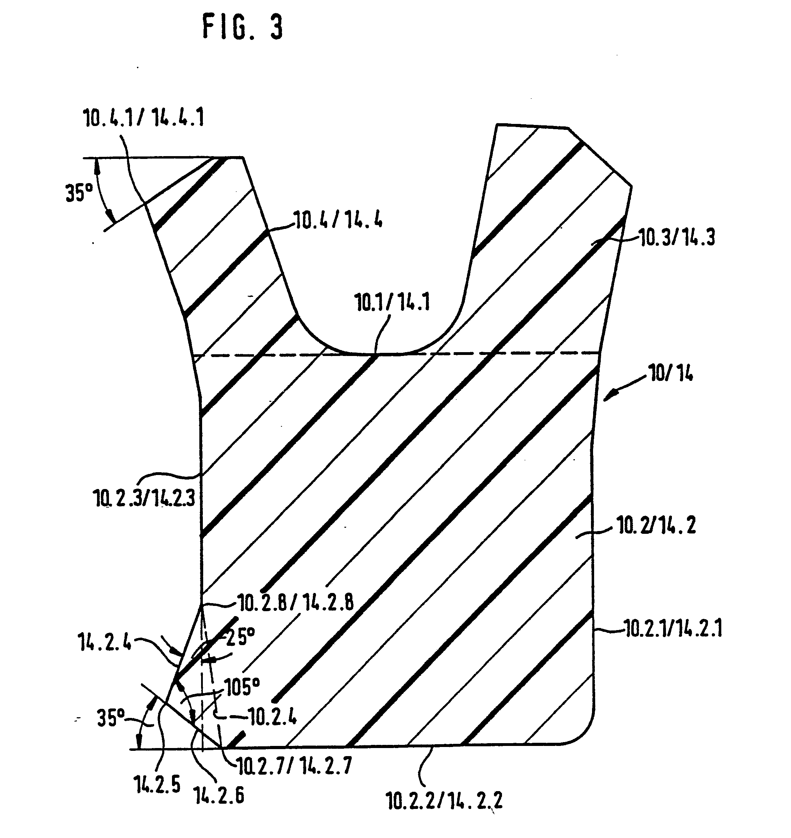

Nach Fig. 3 weisen die Profile der beiden Dichtungskörper 10 und 14 der ersten Ausführungsform einen ungefähr quadratischen Aufspannteil 10.2 bzw. 14.2 mit einer radial inneren kreiszylindrischen Mantelfläche 10.2.1 bzw. 14.2.1, die an der Umfangsfläche 4 des Speicherkolbens 1 anliegt, und mit einer kreisringförmigen ebenen Stirnfläche 10.2.2 bzw. 14.2.2 auf, die am Außenbund 3 des Kolbens anliegt. Eine radial äußere kreiszylindrische Mantelfläche 10.2.3 bzw. 14.2.3 koaxial zur inneren Mantelfläche 10.2.1 bzw. 14.2.1 geht in der Nähe der Stirnfläche 10.2.2 bzw. 14.2.2 im Punkte 10.2.8 bzw. 14.2.8

a. im Falle des Gas-Dichtungskörpers 14 in eine divergierende konische Mantelfläche 14.2.4 mit einem Kegelöffnungswinkel von zweimal 25° über, die axial vor der Stirnfläche 14.2.2 an einer kreisförmigen, stumpfwinkligen Sekundärdichtkante 14.2.5 endet, an der eine konvergierende konische Mantelfläche 14.2.6 beginnt, die mit der Mantelfläche 14.2.4 einen Winkel von 105° einschließt und an der Stirnfläche 14.2.2 in einer stumpfwinkligen Stirnkante 14.2.7 endet, deren Durchmesser kleiner ist als der Durchmesser der zylindrischen Mantelfläche 14.2.3.

b. im Falle des Flüssigkeits-Dichtungskörpers 10 in eine konvergierende konische Mantelfläche 10.2.4 über, die an einer stumpfwinkligen, die Stirnfläche 10.2.2 radial außen begrenzenden Stirnkante 10.2.7 endet, deren Durchmesser kleiner ist als der Durchmesser der Mantelfläche 10.2.3.

Aus Fig. 3 ist ersichtlich, daß die Punkte 10.2.7 und 14.2.7 zusammenfallen, was auch für die Punkte 10.2.8 und 14.2.8 gilt, an denen die Mantelflächen 10.2.4 bzw. 14.2.4 beginnen und in die Mantelflächen 10.2.3 bzw. 14.2.3 übergehen.

Neben einer radial inneren Haftlippe 10.3 bzw. 14.3 im Anschluß an den Aufspannteil 10.2 bzw. 14.2 auf dessen der Stirnfläche 10.2.2 bzw. 14.2.2 abgewandten Seite begrenzt eine Dichtlippe 10.4 bzw. 14.4 die Nut 10.1 bzw. 14.1. Die Dichtlippe 10.4 bzw. 14.4 weist eine unter 35° gegen die Stirnfläche 10.2.2 bzw. 14.2.2 angestellte, stumpfwinklige, kreisförmige Dichtkante 10.4.1 bzw. 14.4.1 auf, bei der es sich im Falle des Flüssigkeits-Dichtungskörpers 10 um die Primärdichtkante handelt, deren Durchmesser größer ist als der Durchmesser der Mantelfläche 10.2.3 und im Falle des Gas-Dichtungskörpers 14 auch größer ist als der Durchmesser der Sekundärdichtkante 14.2.5.

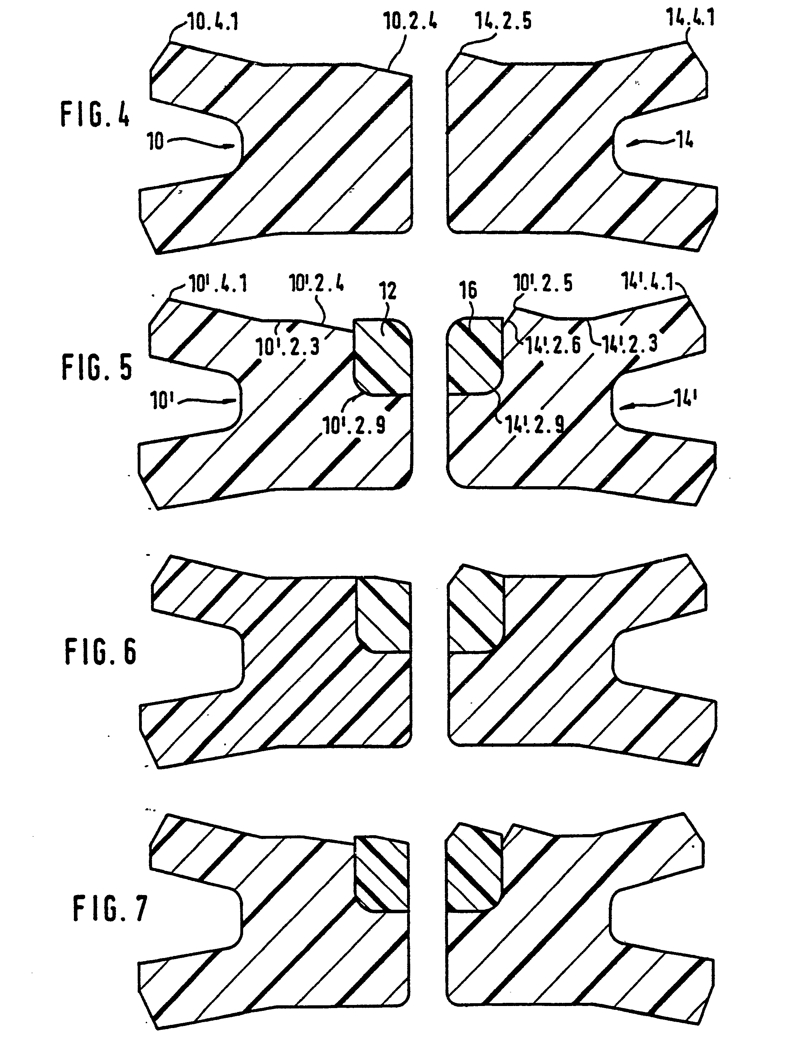

Die Dichtungskörper 10' und 14' der zweiten Ausführungsform unterscheiden sich von den Dichtungskörpern 10 bzw. 14 der ersten Ausführungsform gemäß Fig. 1, 3 und 4 nach Fig. 2 und 5 lediglich dadurch, daß die als Rampe anzusehende konische Mantelfläche 10'.2.4 und die Sekundärdichtkante 14'.2.5 der Primärdichtkante 10'.4.1 bzw. Dichtkante 14'.4.1 nähergerückt sind, um dem Backring 12 bzw. 16 Platz zu machen, die in einer umlaufenden, im wesentlichen rechteckigen Eckaussparung 10'.2.9 bzw. 14'.2.9 des Aufspannteiles 10'.2 bzw. 14'.2 derart angeordnet sind, daß sie mit je einer axialen Stirnfläche an die konische Mantelfläche 10'.2.4 bzw. 14'.2.6 angrenzen und mit ihrem äußeren Umfang in der gemeinsamen Zylinderfläche der Mantelflächen 10'.2.3 bzw. 14'.2.3 liegen.

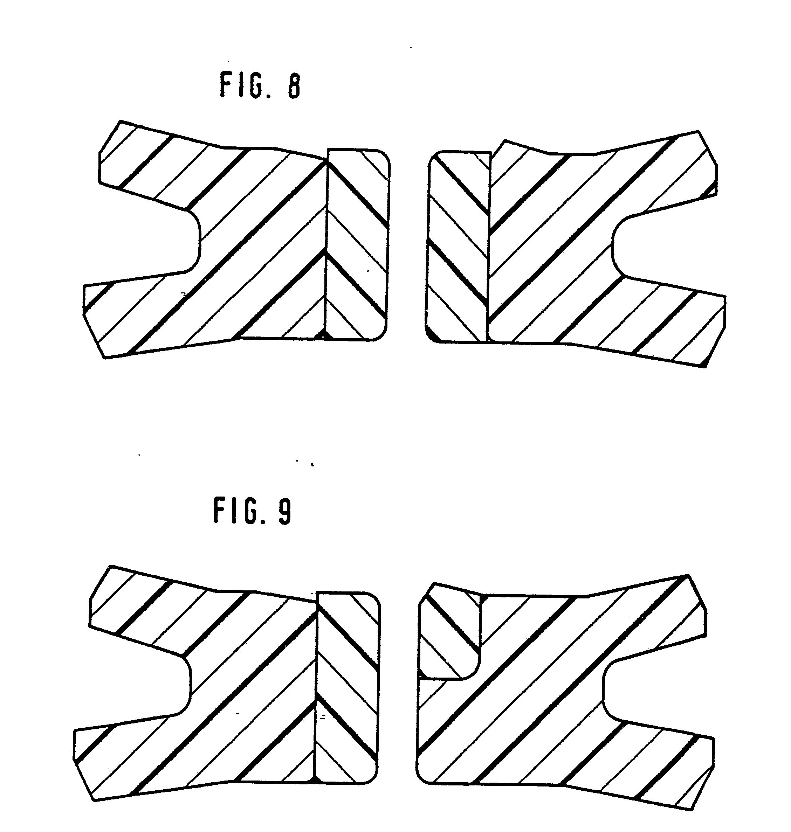

Bei der dritten Ausführungsform gemäß Fig. 6 ist die rampenförmige konische Mantelfläche 10.2.4 der ersten Ausführungsform an einem dem Backring 12 der zweiten Ausführungsform entsprechenden Backring ausgebildet ; desgleichen ist die Sekundärdichtkante 14.2.5 der ersten Ausführungsform an einem dem Backring 16 der zweiten Ausführungsform entsprechenden Backring ausgebildet.

Bei der vierten Ausführungsform gemäß Fig. 7 sind durch Kombination von Merkmalen der zweiten und dritten Ausführungsform zwei den rampenförmigen konischen Mantelflächen 10.2.4 der ersten Ausführungsform bzw. 14'.2.4 der zweiten Ausführungsform entsprechende Rampen sowie zwei den Sekundärdichtkanten 14.2.5 der ersten Ausführungsform bzw. 14'.2.5 der zweiten Ausführungsform entsprechende Sekundärdichtkanten teils an den Backringen, teils an den Aufspannteilen der Dichtungskörper vorhanden.

Die fünfte Ausführungsform gemäß Fig. 8 stimmt mit der zweiten Ausführungsform gemäß Fig. 5 prinzipiell überein, bis auf den Unterschied, daß die Backringe 12 und 16 der zweiten Ausführungsform unter Verkleinerung der Aufspannteile radial nach innen verbreitert sind, sich also bis zur Umfangsfläche 4 des Speicherkolbens 1 erstrecken.

Aus Fig. 9 ist eine Variante der fünften Ausführungsform gemäß Fig. 8 und der dritten Ausführungsform gemäß Fig. 6 ersichtlich, wonach der links gezeichnete Flüssigkeits-Dichtungskörper mit Backring der fünften Ausführungsform mit dem rechts gezeichneten Gas-Dichtungskörper mit Backring der dritten Ausführungsform kombiniert ist.

## Patentansprüche

1. Dichtungsanordnung für hydropneumatische Druckspeicher mit einem in einem zylindrischen Hohlraum axial verschiebbaren Kolben (1) zur Trennung eines Gasraumes und eines Flüssigkeitsraumes voneinander, wobei der Kolben (1) in axialem Abstand voneinander zwei ringförmige Dichtungskörper (10 und 14), gegebenenfalls unterschiedlicher Härte, mit ungefähr U-förmigem Profil trägt, welche je, an einen ungefähr rechteckig profilierten Aufspannteil (10.2 bzw. 14.2) je einstückig angeformt, eine kolbenseitige Haftlippe (10.3 bzw. 14.3) und eine, durch eine Ringnut (10.1 bzw. 14.1) von dieser getrennte Dichtlippe (10.4 bzw. 14.4) mit einer stumpfwinkligen Dichtkante (10.4.1 bzw. 14.4.1) aufweisen, deren fluidseitige Flanke (in Fig. 3 oben) bezüglich der Kolbenachse steil und deren kolbenmittenseitige Flanke (in Fig. 3 unten) diesbezüglich flacher ist ; und wobei sich die zwei Ringnuten (10.1 und 14.1) der beiden Dichtungskörper (10 und 14) in einander entgegengesetzte axiale Richtungen öffnen, dadurch gekennzeichnet, daß der den axial zwischen den beiden Dichtlippen (10.4 und 14.4) gelegenen Gleitspalt gegen den Gasraum abdichtende Gas-Dichtungskörper (14) am radial äußeren Umfang seines Aufspannteiles (14.2) mit einer einstückig angeformten, mit dem anderen Dichtungskörper (10) zusammenwirkenden stumpfwinkligen Sekundärdichtkante (14.2.5) versehen ist, deren diesem anderen Dichtungskörper (10) zugewandte Flanke (14.2.6) steil und deren dichtlippenseitige Flanke (14.2.4) flacher ist.

2. Dichtungsanordnung nach Anspruch 1, dadurch gekennzeichnet, daß die Sekundärdichtkante (14.2.5) am kolbenmittenseitigen Ende des den Gasraum abdichtenden Gas-Dichtungskörpers (14) angeordnet ist, wobei die steile Flanke (14.2.6) der Sekundärdichtkante radial innen an der kolbenmittenseitigen Stirnfläche (14.2.2) dieses Gas-Dichtungskörpers (14) endet.

3. Dichtungsanordnung nach Anspruch 1 oder 2, dadurch gekennzeichnet, daß der den axial zwischen den beiden Dichtlippen (10.4, 14.4) gelegenen Gleitspalt gegen den Flüssigkeitsraum abdichtende Dichtungskörper (10) am radial äußeren Umfang seines Aufspannteiles (10.2) mit einer flachen Rampe (10.2.4) zur Leckflüssigkeitsrückförderung versehen ist, welche diesen Dichtungskörper (10) in axialer Richtung zur Kolbenmitte radial verjüngt.

4. Dichtungsanordnung nach Anspruch 3, dadurch gekennzeichnet, daß die Rampe (10.2.4) am kolbenmittenseitigen Ende des den Flüssigkeitsraum abdichtenden Dichtungskörpers (10) angeordnet ist, wobei die Rampe (10.2.4) radial innen an der kolbenmittenseitigen Stirnfläche (10.2.2) dieses Dichtungskörpers (10) endet.

5. Dichtungsanordnung nach einem der Ansprüche 1 bis 4, gekennzeichnet durch einen jedem Dichtungskörper (10' und 14') zugeordneten Backring (12 bzw. 16), der gegebenenfalls in einer radial äußeren Eckaussparung (10'.2.9, 14'.2.9) des Aufspannteiles (10'.2, 14'.2) des Dichtungskörpers an dessen kolbenmittenseitigem Ende angeordnet ist.

6. Dichtungsanordnung nach Anspruch 1 oder 2, dadurch gekennzeichnet, daß der den axial zwischen den beiden Dichtlippen (10.4 und 14.4) gelegenen Gleitspalt gegen den Flüssigkeitsraum abdichtende Dichtungskörper (10) am kolbenmittenseitigen Ende seines Aufspannteiles (10.2) mit einem, gegebenenfalls in einer radial äußeren Eckaussparung (in Fig. 6 links : rechts oben) dieses Aufspannteiles (10.2) angeordneten, Backring (in Fig. 6 links : rechts oben) versehen ist, der eine flache Rampe (10.2.4) zur Leckflüssigkeitsrückförderung aufweist, welche den Backring (in Fig. 6 links : rechts oben) in axialer Richtung zur Kolbenmitte radial verjüngt.

7. Dichtungsanordnung für hydropneumatische Druckspeicher, nach dem Oberbegriff von Anspruch 1, dadurch gekennzeichnet, daß der den axial zwischen den beiden Dichtlippen (10.4 und 14.4) gelegenen Gleitspalt gegen den Gasraum abdichtende Dichtungskörper (14) am kolbenmittenseitigen Ende seines Aufspannteiles (14.2) mit einem, gegebenenfalls in einer radial äußeren Eckaussparung (in Fig. 6 rechts : links oben) dieses Aufspannteiles (14.2) angeordneten, Backring (in Fig. 6 rechts : links oben) versehen ist, der eine mit dem anderen Dichtungskörper (10) zusammenwirkende stumpfwinklige Sekundärdichtkante (14.2.5) aufweist, deren diesem anderen Dichtungskörper (10) zugewandte Flanke (in Fig. 6 rechts : links) steil und deren dichtlippenseitige Flanke (in Fig. 6 rechts : rechts) flacher ist.

8. Dichtungsanordnung nach Anspruch 7, dadurch gekennzeichnet, daß der den axial zwischen den beiden Dichtlippen (10.4 und 14.4) gelegenen Gleitspalt gegen den Flüssigkeitsraum abdichtende Dichtungskörper (10) am kolbenmittenseitigen Ende seines Aufspannteiles (10.2) mit einem, gegebenenfalls in einer radial äußeren Eckaussparung (in Fig. 6 links : rechts oben) dieses Aufspannteiles (10.2) angeordneten, Backring (in Fig. 6 links : rechts oben) versehen ist, der eine Flache Rampe (10.2.4) zur Leckflüssigkeitsrückförderung aufweist, welche den Backring (in Fig. 6 links : rechts oben) in axialer Richtung zur Kolbenmitte radial verjüngt.

9. Dichtungsanordnung nach Anspruch 7, dadurch gekennzeichnet, daß der den axial zwischen den beiden Dichtlippen (10.4, 14.4) gelegenen Gleitspalt gegen den Flüssigkeitsraum abdichtende Dichtungskörper (10) am radial äußeren Umfang seines Aufspannteiles (10.2) mit einer flachen Rampe (10.2.4) zur Leckflüssigkeitsrückförderung versehen ist, welche diesen Dichtungskörper (10) in axialer Richtung zur Kolbenmitte radial verjüngt.

10. Dichtungsanordnung nach Anspruch 7 oder 9, dadurch gekennzeichnet, daß die Rampe (10.2.4) am kolbenmittenseitigen Ende des den Flüssigkeitsraum abdichtenden Dichtungskörpers (10) angeordnet ist, wobei die Rampe (10.2.4) radial innen an der kolbenmittenseitigen Stirnfläche (10.2.2) dieses Dichtungskörpers (10) endet.

11. Dichtungsanordnung nach einem der Ansprüche 7 bis 10, gekennzeichnet durch einen jedem Dichtungskörper (10' und 14') zugeordneten Backring (12 bzw. 16), der gegebenenfalls in einer radial äußeren Eckaussparung (10'.2.9, 14'.2.9) des Aufspannteiles (10'.2, 14'.2) des Dichtungskörpers an dessen kolbenmittenseitigem Ende angeordnet ist.

## Claims

1. Sealing arrangement for hydropneumatic accumulators comprising a piston (1) which is axially displaceable in a cylindrical cavity to separate a gas chamber and a fluid chamber from one another, the piston (1) bearing two axially spaced annular sealing elements (10 and 14) which have, if necessary, different hardnesses and an approximately U-shaped profile and each of which has, formed in one piece on a clamping part (10.2 or 14.2) having an approximately rectangular profile, a retentive lip (10.3 or 14.3) on the piston side and a sealing lip (10.4 or 14.4) separated from this retentive lip by an annular groove (10.1 or 14.1) and having an obtuse-angled sealing edge (10.4.1 or 14.4.1), the flank of which on the fluid side (top of Fig. 3) is steep in relation to the piston axis and the flank of which (bottom of Fig. 3) on the piston centre side is flatter in relation to the piston axis ; and the two annular grooves (10.1 and 14.1) of the two sealing elements (10 and 14) opening in opposite axial directions, characterised in that the gas sealing element (14) which seals the sliding gap axially situated between the two sealing lips (10.4 and 14.4) against the gas chamber is provided on the radially outer circumference of its clamping part (14.2) with an obtuse-angled secondary sealing edge (14.2.5) which is formed in one piece on the clamping part and cooperates with the other sealing element (10), the flank (14.2.6) of which secondary sealing edge facing this other sealing element (10) is steep and the flank (14.2.4) of which on the sealing lip side is flatter.

2. Sealing arrangement according to Claim 1, characterised in that the secondary sealing edge (14.2.5) is arranged at the end of the gas sealing element (14) sealing the gas chamber on the piston centre side, the steep flank (14.2.6) of the secondary sealing edge ending on the radially inner side on the face (14.2.2) of this gas sealing element (14) on the piston centre side.

3. Sealing arrangement according to claims 1 or 2, characterised in that the sealing element (10) which seals the sliding gap axially situated between the two sealing lips (10.4, 14.4) against the fluid chamber is provided on the radial outer circumference of its clamping part (10.2) with a flat ramp (10.2.4) for the return of leaking fluid, which causes the radial tapering of this sealing element (10) in the axial direction towards the piston centre.

4. Sealing arrangement according to Claim 3, characterised in that the ramp (10.2.4) is arranged on the end of the sealing element (10) sealing the fluid chamber on the piston centre side, the ramp (10.2.4) ending on the radially inner side on the face (10.2.2) of this sealing element (10) on the piston centre side.

5. Sealing arrangement according to any one of Claims 1 to 4, characterised by a back-up ring (12 or 16) which is associated with each sealing element (10' or 14') and which, if necessary, is arranged in a radially outer corner recess (10'.2.9, 14'.2.9) of the clamping part (10'.2, 14'.2) of the sealing element, at its end on the piston centre side.

6. Sealing arrangement according to Claim 1 or 2, characterised in that the sealing element (10) which seals the sliding gap situated axially between the two sealing lips (10.4 and 14.4) against the fluid chamber, is provided at the end of its clamping part (10.2) on the piston centre side with a back-up ring (in Fig. 6 on left : top right), if necessary, arranged in a radially outer corner recess (in Fig. 6 left : top right) of this clamping part (10.2), which back-up ring has a flat ramp (10.2.4) for the return of leaking fluid, which ramp causes radial tapering of the back-up ring (in Fig. 6 left : top right) in the axial direction towards the piston centre.

7. Sealing arrangement for hydropneumatic accumulators, according to the preamble of Claim 1, characterised in that the sealing element (11) which seals the sliding gap situated axially between the two sealing lips (10.4 and 14.4) against the gas chamber is provided at the end of its clamping part (14.2) on the piston centre side with a back-up ring (in Fig. 6 on right : top left) which, if necessary, is arranged in a radially outer corner recess (in Fig. 6 on right : top left) of this clamping part (14.2) and which has an obtuse-angled secondary sealing edge (14.2.5) which cooperates with the other sealing element (10) and the flank (in Fig. 6 on right ; on left) of which facing this other sealing element (10) is steep and the flank (in Fig. 6 on right ; on right) of which on the sealing lip side is flatter.

8. Sealing arrangement according to Claim 7, characterised in that the sealing element (10) which seals the sliding gap situated axially between the two sealing lips (10.4 and 14.4) against the fluid chamber is provided at the end of its clamping part (10.2) on the piston centre side with a back-up ring (in Fig. 6 on left : top right) which, if necessary, is arranged in a radially outer corner recess (in Fig. 6 on left : top right) of this clamping part (10.2) and which has a flat ramp (10.2.4) for the recirculation of leaking fluid, which ramp causes radial tapering of the back-up ring (in Fig. 6 on left : top right) in the axial direction towards the piston centre.

9. Sealing arrangement according to Claim 7, characterised in that the sealing element (10) which seals the sliding gap situated axially between the two sealing lips (10.4, 14.4) against the fluid chamber is provided on the radially outer circumference of its clamping part (10.2) with a flat ramp (10.2.4) for the recirculation of leaking fluid, which ramp causes radial tapering of this sealing element (10) in the axial direction towards the piston centre.

10. Sealing arrangement according to Claim 7 or 9, characterised in that the ramp (10.2.4) is arranged at the end of the sealing element (10) which seals the fluid chamber on the piston centre side, the ramp (10.2.4) ending on the radially inner side on the face (10.2.2) of this sealing element (10) on the piston centre side.

11. Sealing arrangement according to any one of Claims 7 to 10, characterised by a back-up ring (12 or 16) which is associated with each sealing element (10' and 14') and which, if necessary, is arranged in a radially outer corner recess (10'.2.9, 14'.2.9) of the clamping part (10'.2, 14'2) of the sealing element, at its end on the piston centre side.

## Revendications

1. Dispositif d'étanchéité pour des accumulateurs de pression hydropneumatiques, avec un piston (1) déplaçable dans le sens axial dans un espace vide cylindrique pour séparer un compartiment de gaz d'un compartiment de liquide, le piston (1) portant deux éléments d'étanchéité annulaires (10 et 14) disposés à distance axiale l'un de l'autre et présentant, le cas échéant, des duretés différentes et un profil sensiblement en forme de U, lesdits éléments d'étanchéité comprenant une lèvre d'adhérence (10.3 et respectivement 14.3) du côté piston et une lèvre d'étanchéité (10.4 et respectivement 14.4) conformés chacun en une seule pièce avec une section de fixation (10.2 et respectivement 14.2) ayant un profil à peu près rectangulaire, et dont la lèvre d'étanchéité est séparée de la lèvre d'adhérence par une rainure annulaire (10.1 et respectivement 14.1) et munie d'une arête d'étanchéité à angle obtus (10.4.1 et respectivement 14.4.1) dont le flanc du côté fluide (en haut dans la fig. 3) est à forte pente par rapport à l'axe du piston et dont le flanc du côté du milieu du piston (en bas dans la fig. 3) est plus plat ; et les deux rainures (10.1 et 14.1) des deux éléments d'étanchéité (10 et 14) s'ouvrant dans des directions axialement opposées, caractérisé en ce que l'élément d'étanchéité au gaz (14) qui assure l'étanchéité entre la fente de glissement, disposée axialement entre les deux lèvres d'étanchéité (10.4 et 14.4), et le compartiment de gaz est muni, sur la périphérie radialement extérieure de sa section de fixation (14.2), d'une arête d'étanchéité secondaire à angle obtus (14.2.5) conformée en une seule pièce et coopérant avec l'autre élément d'étanchéité (10), dont le flanc (14.2.6) dirigé vers cet autre élément d'étanchéité (10) est à forte pente, tandis que le flanc (14.2.4) disposé du côté de la lèvre d'étanchéité est plus plat.

2. Dispositif d'étanchéité selon la revendication 1 caractérisé en ce que l'arête d'étanchéité secondaire (14.2.5) est placée à l'extrémité de l'élément d'étanchéité au gaz (14) assurant l'étanchéité du compartiment de gaz située du côté du milieu du piston, le flanc raide (14.2.6) de l'arête d'étanchéité secondaire se terminant radialement à l'intérieur, sur la surface frontale (14.2.2) de cet élément d'étanchéité au gaz (14) du côté du milieu du piston.

3. Dispositif d'étanchéité selon l'une des revendications 1 ou 2, caractérisé en ce que l'élément d'étanchéité (10) assurant l'étanchéité entre la fente de glissement située axialement entre les deux lèvres d'étanchéité (10.4, 14.4) et le compartiment de liquide, comporte sur la périphérie radialement extérieure de sa section de fixation (10.2) une rampe plate (10.2.4) pour le retour du liquide de fuite laquelle provoque un rétrécissement radial de cet élément d'étanchéité (10) dans le sens axial en direction du milieu du piston.

4. Dispositif d'étanchéité selon la revendication 3, caractérisé en ce que la rampe (10.2.4) est disposée à l'extrémité du côté du milieu du piston de l'élément d'étanchéité (10) qui assure l'étanchéité du compartiment de liquide, la rampe (10.2.4) se terminant, radialement à l'intérieur, sur la surface frontale (10.2.2) de cet élément d'étanchéité (10) du côté du milieu du piston.

5. Dispositif d'étanchéité selon l'une quelconque des revendications 1 à 4, caractérisé en ce qu'il comprend une bague d'appui (12 et respectivement 16) associée à chacun des éléments d'étanchéité (10' et 14') et disposée, le cas échéant, dans un évidement d'angle radialement extérieur (10'.2.9, 14'.2.9) de la section de fixation (10'.2, 14'.2) de l'élément d'étanchéité, à l'extrémité de celle-ci située du côté du milieu du piston.

6. Dispositif d'étanchéité selon l'une des revendications 1 ou 2, caractérisé en ce que l'élément d'étanchéité (10) assurant l'étanchéité de la fente de glissement située axialement entre les deux lèvres d'étanchéité (10.4 et 14.4) par rapport au compartiment de liquide est muni, à l'extrémité de sa section de fixation (10.2) du côté du milieu du piston, d'une bague d'appui (dans la fig. 6 à gauche : en haut à droite) placée éventuellement dans un évidement d'angle radialement extérieur (dans la fig. 6 à gauche : en haut à droite) de cette section de fixation (10.2), laquelle bague d'appui présente une rampe plate (10.2.4) pour le retour du liquide de fuite qui réduit la bague d'appui (dans la fig. 6 à gauche : en haut à droite) radialement dans le sens axial en direction du milieu du piston.

7. Dispositif d'étanchéité pour des accumulateurs de pression hydropneumatiques selon le préambule de la revendication 1, caractérisé en ce que l'élément d'étanchéité (14) assurant l'étanchéité de la fente de glissement située axialement entre les deux lèvres d'étanchéité (10.4 et 14.4) par rapport au compartiment de gaz est muni, à l'extrémité de sa section de fixation (14.2) du côté du milieu du piston, d'une bague d'appui (dans la fig. 6 à droite : en haut à gauche) placée éventuellement dans un évidement d'angle radialement extérieur (dans la fig. 6 : en haut à gauche) de cette section de fixation (14.2), laquelle bague d'appui présente une arête d'étanchéité secondaire à angle obtus (14.2.5) qui coopère avec l'autre élément d'étanchéité (10) et dont le flanc (dans la fig. 6 à droite : à gauche) dirigé vers cet autre élément d'étanchéité (10) présente une forte pente, tandis que son flanc situé du côté de la lèvre d'étanchéité (dans la fig. 6 à droite : à droite) est plus plat.

8. Dispositif d'étanchéité selon la revendication 7, caractérisé en ce que l'élément d'étanchéité (10) assurant l'étanchéité de la fente de glissement située axialement entre les deux lèvres d'étanchéité (10.4 et 14.4) par rapport au compartiment de liquide est muni, à l'extrémité de sa section de fixation (10.2) du côté du milieu du piston, d'une bague d'appui (dans la fig. 6 à gauche : en haut à droite) disposée éventuellement dans un évidement d'angle radialement extérieur (dans la fig. 6 à gauche : en haut à droite) de cette section de fixation (10.2), ladite bague d'appui présentant une rampe (10.2.4) pour le retour du liquide de fuite qui réduit la bague d'appui (dans la fig. 6 à gauche : en haut à droite) radialement dans le sens axial en direction du milieu du piston.

9. Dispositif d'étanchéité selon la revendication 7, caractérisé en ce que l'élément d'étanchéité (10) assurant l'étanchéité de la fente de glissement située entre les deux lèvres d'étanchéité (10.4, 14.4) par rapport au compartiment de liquide est muni, sur la périphérie radialement extérieure de sa section de fixation (10.2), d'une rampe plate (10.2.4) pour le retour du liquide de fuite qui réduit cet élément d'étanchéité (10) radialement dans le sens axial en direction du milieu du piston.

10. Dispositif d'étanchéité selon l'une des revendications 7 ou 9, caractérisé en ce que la rampe (10.2.4) est disposée à l'extrémité du côté du milieu du piston de l'élément d'étanchéité (10) qui assure l'étanchéité du compartiment de liquide, la rampe (10.2.4) se terminant radialement à l'intérieur de la surface frontale (10.2.2) de cet élément d'étanchéité (10) située du côté du milieu du piston.

11. Dispositif d'étanchéité selon l'une quelconque des revendications 7 à 10, caractérisé en ce qu'il comprend une bague d'appui (12 et respectivement 16) associée à chacun des éléments d'étanchéité (10' et 14') qui est disposée, éventuellement dans un évidement d'angle radialement extérieur (10'.2.9, 14'.2.9) de la section de fixation (10'.2, 14'.2) de l'élément d'étanchéité, à l'extrémité de celui-ci située du côté du milieu du piston.

FIG.1

FIG.2

# FIG. 3

10.4.1/ 14.4.1

35°

10.4/ 14.4

10.3/ 14.3

10.1/ 14.1

10/ 14

10.2.3/ 14.2.3

10.2/ 14.2

10.2.8/ 14.2.8

25°

10.2.1/ 14.2.1

14.2.4

105°

35°

10.2.4

14.2.5   14.2.6

10.2.7/ 14.2.7

10.2.2/ 14.2.2

FIG. 4

FIG. 5

FIG. 6

FIG. 7

3

FIG. 8

FIG. 9